# EUROPEAN PATENT SPECIFICATION

(11) **EP 2 138 515 B1**
(45) Date of publication and mention of the grant of the patent: **29.06.2011**
(21) Application number: 08739806.1
(22) Date of filing: 03.04.2008
(51) Int. Cl.: C08F 2/26, C08F 14/18

(54) **METHOD FOR PRODUCING FLUORINE-CONTAINING POLYMER USING FLUORINE-CONTAINING CARBOXYLIC ACID COMPOUND**
VERFAHREN ZUR HERSTELLUNG VON FLUORHALTIGEM POLYMER UNTER VERWENDUNG VON FLUORHALTIGER CARBONSÄUREVERBINDUNG
PROCÉDÉ DE FABRICATION D'UN POLYMÈRE CONTENANT DU FLUOR À L'AIDE D'UN COMPOSÉ D'ACIDE CARBOXYLIQUE CONTENANT DU FLUOR

(30) Priority: 13.04.2007 JP 2007105807
(43) Date of publication of application: 30.12.2009
(73) Proprietor: Asahi Glass Company, Limited, Tokyo 100-8405 (JP)
(72) Inventor: MATSUOKA, Yasuhiko, Tokyo 100-8405 (JP); WATANABE, Kunio, Tokyo 100-8405 (JP); KAMIYA, Hiroki, Tokyo 100-8405 (JP)
(74) Representative: Müller-Boré & Partner Patentanwälte
(86) International application number: PCT/JP2008/056699
(87) International publication number: WO 2008/132959

(56) References cited:
- WO-A1-2008/001895
- WO-A1-2008/032613
- JP-A- 08 067 795
- JP-A- 10 053 682
- JP-A- 11 255 995
- JP-A- 2002 088 103
- JP-A- 2002 317 003
- JP-A- 2004 285 264
- JP-A- 2005 350 580
- JP-A- 2006 274 237
- JP-A- 2007 211 233
- JP-A- 2008 063 567
- US-A- 2 750 350
- US-A- 5 654 373
- DATABASE WPI Week 197341 Thomson Scientific, London, GB; AN 1973-61702U XP002578202 & JP 48 032578 B (KUREHA KAGAKU KOGYO KK) 6 October 1973 (1973-10-06)

## Description

### TECHNICAL FIELD

The present invention relates to a method for producing a fluoropolymer obtainable by polymerizing a fluoromonomer by aqueous emulsion polymerization in the presence of a polymerization catalyst in an aqueous medium containing a fluorocarboxylic acid compound.

### BACKGROUND ART

In an aqueous emulsion polymerization of a fluoromonomer to be used for producing a fluoropolymer such as polytetrafluoroethylene (hereinafter referred to as "PTFE") as a non-melt-processable fluoropolymer, a melt-processable fluoropolymer or a fluoroelastomer, ammonium perfluorooctanoate which is a fluorinated emulsifier is usually used as an emulsifier in an aqueous medium not to hinder a polymerization reaction by a chain transfer.

An aqueous emulsion obtainable by such aqueous emulsion polymerization is processed into a solid form of e.g. a powder by coagulating the aqueous emulsion and drying it, and then such a powder is used as a material for various molded products.

With respect to ammonium perfluorooctanoate to be usually used for aqueous emulsion polymerization of a fluoromonomer, there has been a concern expressed about e.g. accumulation potential from the environmental and sanitary viewpoints, and therefore many fluorinated compounds are proposed as alternative materials thereof (Patent Documents 1 and 2).

However, such documents are not directed to a purpose for improving the yield of a polymer per unit time.
Patent Document 1: JP-A-2002-317003
Patent Document 2: JP-A-2006-274237

### DISCLOSURE OF THE INVENTION

### OBJECT TO BE ACCOMPLISHED BY THE INVENTION

It is an object of the present invention to provide a method for improving the production efficiency at the time of producing a fluoropolymer by polymerizing a fluoromonomer by aqueous emulsion polymerization in the presence of a polymerization catalyst in an aqueous medium containing a fluorocarboxylic acid compound.

### MEANS TO ACCOMPLISH THE OBJECT

The present inventors have conducted extensive studies to accomplish the above object, and as a result, they have found that it is possible to accomplish the above object by adjusting conditions of an aqueous medium during polymerization at the time of aqueous emulsion polymerization of a fluoromonomer by using a fluorocarboxylic acid compound. The present invention has been accomplished on the basis of this discovery.

Namely, the present invention provides a method for producing a fluoropolymer, which comprises polymerizing a fluoromonomer by emulsion polymerization in the presence of a polymerization catalyst in an aqueous medium containing a fluorocarboxylic acid compound, wherein the aqueous medium during the polymerization has a pH of at most 4.

Further, the present invention provides the above method for producing a fluoropolymer, wherein the fluorocarboxylic acid compound has at most 6 carbon atoms and further has at most 3 etheric oxygen atoms per molecule.

Further, the present invention provides the above method for producing a fluoropolymer, wherein the fluorocarboxylic acid compound is a perfluorocarboxylic acid compound.

Further, the present invention provides the above method for producing a fluoropolymer, wherein the fluorocarboxylic acid compound is C₅F₁₁COOX (X is a hydrogen atom, an alkali metal or NH₄.).

Further, the present invention provides the above method for producing a fluoropolymer, wherein the C₅F₁₁COOX (X is a hydrogen atom, an alkali metal or NH₄.) is C₅F₁₁COOH.

Further, the present invention provides the above method for producing a fluoropolymer, wherein the fluorocarboxylic acid compound is CF₃CF₂OCF₂CF₂OCF₂COOX (X is a hydrogen atom, an alkali metal or NH₄.)

Further, the present invention provides the above method for producing a fluoropolymer, wherein the CF₃CF₂OCF₂CF₂OCF₂COOX (X is a hydrogen atom, an alkali metal or NH₄.) is CF₃CF₂OCF₂CF₂OCF₂COOH.

Further, the present invention provides the above method for producing a fluoropolymer, wherein the aqueous medium in the polymerization has a pH of at least 1.

Further, the present invention provides the above method for producing a fluoropolymer, wherein the fluoromonomer is at least one member selected from the group consisting of tetrafluoroethylene (TFE), vinylidene fluoride (VdF), hexafluoropropylene (HFP), a perfluoro(alkyl vinyl ether) (PFAVE), chlorotrifluoroethylene (CTFE), a polyfluoroalkylethylene, perfluoro(2,2-dimethyl-1,3-dioxole), a perfluoro(4-alkoxy-1,3-dioxole) and CF₂=CFO(CF₂)ₙCF=CF₂ (wherein n is 1 or 2.).

Further, the present invention provides the above method for producing a fluoropolymer, wherein the fluoromonomer is tetrafluoroethylene.

### EFFECT OF THE INVENTION

According to the method for producing a fluoropolymer of the present invention, it is possible to obtain a large amount of a fluoropolymer, per unit time, with a large molecular weight, and therefore such a method is particularly excellent in production efficiency.

### BEST MODE FOR CARRYING OUT THE INVENTION

In the present invention, a fluoromonomer is preferably at least one member selected from the group consisting of tetrafluoroethylene (TFE), vinylidene fluoride (VdF), hexafluoropropylene (HFP), a perfluoro(alkyl vinyl ether) (PFAVE), chlorotrifluoroethylene (CTFE), a polyfluoroalkyl ethylene, perfluoro(2,2-dimethyl-1,3-dioxol), a perfluoro(4-alkoxy-1,3-dioxol) and CF₂=CFO(CF₂)ₙCF=CF₂ wherein n is 1 or 2.

In the present invention, it is preferred to further copolymerize an olefin such as ethylene, propylene or butene, in addition to the above fluoromonomer.

The fluoropolymer of the present invention includes, for example, PTFE and a melt-processable fluoropolymer, which are obtainable by polymerizing the above fluoromonomer.

PTFE includes a modified PTFE. The modified PTFE may, for example, be a modified PTFE which does not have melt-processability and which is a copolymer of TFE with at least one fluorocomonomer selected from the group consisting of HFP, PFAVE, CTFE, a (perfluoroalkyl) ethylene, VdF, and a perfluoro(alkenyl vinyl ether). In the modified PTFE, the content of constituting units based on a comonomer is preferably at most 0.5 mass%, more preferably at most 0.4 mass%.

The melt-processable fluoropolymer may, for example, be a TFE/HFP copolymer (FEP), a copolymer (PFA) obtained by copolymerizing TFE with a PFAVE such as perfluoro (propyl vinyl ether) (PPVE), a TFE/ethylene copolymer (ETFE), an ethylene/CTFE copolymer (ECTFE) or a VdF homopolymer (PVdF).

In the present invention, at the time of polymerizing the fluoromonomer by emulsion polymerization in the presence of a polymerization catalyst in an aqueous medium containing a fluorocarboxylic acid compound, the aqueous medium during the polymerization is characterized by having a pH of at most 4, preferably at most 3.5, particularly preferably at most 3.0.

Further, from the viewpoint of handling efficiency of the aqueous medium or the aqueous emulsion after the polymerization and the corrosion resistance of an apparatus, the lower limit of a pH of the aqueous medium is preferably at least 1, particularly preferably at least 1.5. Here, the time period of "during the polymerization" is a period of from the beginning to the end of the polymerization. The pH at the begging of the polymerization means a pH of an aqueous medium before the polymerization catalyst and the fluoromonomer are introduced thereto. It is important that the aqueous medium at the beginning of the polymerization has a pH of at most 4, preferably at most 3.5, particularly preferably at most 3.0. The aqueous medium at the end of the polymerization has a pH of preferably at most 2.7, more preferably at most 2.5.

The fluorocarboxylic acid compound to be used for the polymerization preferably has at most 6 carbon atoms and at most 3 etheric oxygen atoms per molecule, since the solubility in the aqueous medium is lowered if the chain length of the compound is long. Further, the fluorocarboxylic acid compound is preferably a perfluorocarboxylic acid compound, further the surface activity in an aqueous medium is deteriorated if the chain length is short, and therefore C₅F₁₁COOX (X is a hydrogen atom, an alkali metal or NH₄) and CF₃CF₂OCF₂CF₂OCF₂COOX (X is a hydrogen atom, an alkali metal or NH₄) may be mentioned as a preferred example. Among them, from the viewpoint of prevention of a metal component residue, C₅F₁₁COOH (hereinafter referred to as "PFHxA"), C₅F₁₁COONH₄ (hereinafter referred to as "APFHx"), CF3CF₂OCF₂CF₂CF₂COOH (hereinafter referred to as "PFDOA") or CF₃CF₂OCF₂CF₂OCF₂COONH₄ (hereinafter referred to as "APFDO") is particularly preferred. Further, a perfluoroalkyl group chain in each of PFHxA and APFHx has a straight chain component of preferably at least 90%, more preferably at least 95%. In such a range, the emulsion stability during the polymerization becomes excellent.

Further, a method for calculating the straight chain component can be carried out in such a manner that BF₃-CH₃OH is added to a fluorocarboxylic acid compound for methyl esterification, followed by extraction with dichloropentafluoropentane, and then a component thus extracted is analyzed by means of gas chromatography to carry out quantification.

In a case where the above fluorocarboxylic acid compound has a counter ion of an alkali metal or NH₄, it is possible to adjust the pH of the aqueous medium to be at most 4 by adding a mineral acid such as hydrochloric acid, sulfuric acid or nitric acid, or an organic acid such as oxalic acid, malonic acid or succinic acid to the aqueous medium.

Further, by using the above fluorocarboxylic acid compound as it is in the form of an organic acid, it is possible to adjust the aqueous medium to have a pH of at most 4, and in such a case, it is not necessary to adjust the aqueous medium by adding the mineral acid or the organic acid, such being particularly suitable. An alkali metal or an ammonium salt of the fluorocarboxylic acid is produced by synthesizing a fluorocarboxylic acid, followed by neutralizing it with an alkali metal hydroxide or ammonia as desired. Accordingly, the fluorocarboxylic acid is superior to the alkali metal or the ammonium salt of the same fluorocarboxylic acid, since some steps can be omitted in the production and the production is easy.

In the emulsion polymerization for producing PTFE, the fluorocarboxylic acid compound is used in an amount of preferably from 100 to 100,000 ppm based on the final yield of PTFE, more preferably from 1,500 to 20,000 ppm, most preferably from 2,000 to 20,000 ppm, to the end PTFE yield in the case of PTFE.

In the emulsion polymerization for producing the melt-processable fluoropolymer, the content of the fluorocarboxylic acid compound in the aqueous medium is preferably from 0.01 to 10 mass%, more preferably from 0.1 to 5 mass%, most preferably from 0.2 to 3 mass% to the aqueous medium.

In the emulsion polymerization for producing PTFE, e.g. an aqueous medium, an emulsifier, a stabilizing agent and a polymerization catalyst are used at the time of polymerization reaction with TFE or other monomers copolymerizable with TFE.

The stabilizing agent may, for example, preferably be paraffin wax, a fluorine-based oil, a fluorine-based solvent or silicone oil. Such stabilizing agent may be used alone or in combination as a mixture of two or more of them. As the stabilization agent, paraffin wax is more preferred. Paraffin wax may be liquid, semisolid or solid at room temperature, and a saturated hydrocarbon having at least 12 carbon atoms is preferred. The melting point of the paraffin wax is usually from 40 to 65°C, more preferably from 50 to 65°C. The amount of the stabilizing agent to be used is preferably from 0.1 to 12 mass%, more preferably from 0.1 to 8 mass%, based on the mass of the aqueous medium to be used.

As a polymerization catalyst to be used for producing PTFE, e.g. a water-soluble radical polymerization catalyst or a water-soluble oxidation-reduction catalyst is suitably used. As the water-soluble radical polymerization catalyst, preferred is a persulfate such as ammonium persulfate or potassium persulfate, or a water-soluble organic peroxide such as disuccinic acid peroxide, bisglutaric acid peroxide or tert-butylhydroperoxide.

As the water-soluble oxidation-reduction catalyst, it is possible to use a combination of an oxidizer such as a bromic acid compound, a chloric acid compound, a persulfuric acid compound, a permanganic acid compound or a hydrogen peroxide, and a reducing agent such as a sulfurous acid compound, a hydrogen sulfite compound, a thiosulfuric acid compound or an organic acid. Likewise, it is also possible to use an oil-soluble polymerization catalyst. The polymerization catalyst is more preferably disuccinic acid peroxide. The polymerization catalyst may be used alone or in combination as a mixture of two or more of them.

Usually, the amount of the polymerization catalyst to be used is preferably from 0.0001 to 0.20 mass%, more preferably from 0.01 to 0.15 mass%, based on the final yield of PTFE.

Further, in the emulsion polymerization for producing PTFE, it is also possible to use a chain transfer agent such as an alcohol such as methanol or ethanol in order to suppress the molecular weight or increase the stability of the emulsion.

The chain transfer agent is more preferably methanol.

Usually, the amount of the chain transfer agent to be used is preferably from 0 to 1 × 10⁻⁴ mass%, more preferably from 0 to 5×10⁻⁵ mass%, based on the final yield of PTFE.

As the polymerization catalyst to be used in the emulsion polymerization for producing the melt processable fluoropolymer, a conventional radical polymerization catalyst may be used, and a water-soluble polymerization catalyst is particularly preferred. The water-soluble polymerization catalyst may, for example, be a persulfate such as ammonium persulfate, hydrogen peroxide, a redox polymerization catalyst made by combination thereof with a reducing agent such as sodium hydrogen sulfate or sodium thiosulfate, an inorganic polymerization catalyst of a system wherein a small amount of iron, a ferrous salt (such as ferrous sulfate), or silver sulfate is coexisted therewith, or an organic polymerization catalyst such as disuccinic acid peroxide or azobisisobutylamidine dihydrochloride.

The polymerization catalyst may be added at the beginning of the emulsion-polymerization or during the emulsion-polymerization.

The amount of the polymerization catalyst to be added is preferably from 0.0001 to 3 mass%, particularly preferably from 0.001 to 1 mass%, based on the total mass of the monomers used for the polymerization.

As a metal ion which undergoes a redox reaction when the redox polymerization catalyst is used, it is possible to use various metals having multiple ionic valences. As a specific example, a transition metal such as iron, copper, manganese or chrome is preferred, and iron or manganese is particularly preferred.

Further, in order to let the metal which undergoes a redox reaction, be stably present in the aqueous medium, it is preferred to use a metal chelating agent. As the metal chelating agent, ethylenediamine tetraacetic acid is preferred, and from the viewpoint of the solubility in water, disodium ethylenediamine tetraacetate dihydrate is more preferred.

As a redox reaction reagent when the redox polymerization catalyst is used, it is preferred to use a reducing compound. As the reducing compound, various sulfuric sulfur-containing compounds may be used, and Rongalite (chemical formula: CH₂(OH)SO₂Na·2H₂O) is particularly preferred.

In the emulsion polymerization for producing a melt-processable fluoropolymer, a chain transfer agent which controls the molecular weight, may be used. The chain transfer agent may, for example, be an alcohol such as methanol, ethanol or propanol, a chlorofluorohydrocarbon such as 1,3-dichloro-1,1,2,2,3-pentafluoropropane or 1,1-dichloro-1-fluoroethane, or a hydrocarbon such as methane, ethane, propane, butane, pentane, hexane or cyclohexane.

The amount of the chain transfer agent to be added is preferably from 0.001 to 10 mass%, more preferably from 0.01 to 10 mass%, based on the total mass of monomers to be used for the polymerization.

The conditions for the emulsion-polymerization in the present invention are suitably selected depending upon the types of monomers to be used, the copolymerization ratio, and the decomposition temperature of the polymerization catalyst.

The emulsion polymerization temperature is preferably from 10 to 95°C, more preferably from 40 to 80°C. The polymerization pressure is preferably from 0.5 to 4.0 MPa, more preferably from 0.6 to 3.5 MPa. The polymerization time is preferably from 60 to 520 minutes, more preferably from 90 to 360 minutes.

According to the present invention, an average particle diameter of primary particles of PTFE in a PTFE aqueous emulsion obtainable by emulsion polymerization may be within a range of from 0.18 to 0.50 µm, particularly from 0.19 to 0.40 µm. Further, according to the present invention, the average particle size of primary particles of PTFE in a PTFE aqueous emulsion obtainable by emulsion polymerization may be limited to a particularly small range, and particularly such an average particle diameter may be within a range of from 0.18 to 0.23 µm.

The concentration of the fluoropolymer in the aqueous emulsion of the fluoropolymer obtainable by emulsion polymerization is preferably from 10 to 45 mass%. If the concentration of the fluoropolymer is too low, it is difficult to coagulate the fluoropolymer, but if the concentration is too high, the non-coagulated fluoropolymer will remain, and the liquid from coagulation will be turbid. The fluoropolymer concentration is more preferably from 15 to 45 mass%, further preferably from 20 to 40 mass%.

As a method to obtain a PTFE fine powder from the aqueous PTFE emulsion, a know method may be used. Namely, the aqueous PTFE emulsion is diluted with water to a concentration of from 10 to 20 mass%, followed by intense stirring to carry out coagulation. In some cases, the pH may be adjusted, or coagulant such as an electrolyte or a water-soluble organic solvent may be added. The coagulated PTFE is separated from water, followed by drying, whereby it is possible to readily remove off the moisture remained in PTFE.

By adding a coagulating agent to the aqueous emulsion of the melt-processable fluoropolymer, it is possible to coagulate the fluoropolymer. Further, it is possible to coagulate it by freezing the fluoropolymer aqueous emulsion.

As the coagulating agent, it is possible to use one usually used for coagulation of an aqueous emulsion of a fluoropolymer wherein an emulsifier such as ammonium perfluorooctanoate is used.

For example, a water-soluble salt such as calcium chloride, magnesium chloride, aluminum chloride or aluminum nitrate, an acid such as nitric acid, hydrochloric acid or sulfuric acid, a water-soluble organic liquid such as an alcohol or acetone, may be mentioned. The amount of the coagulating agent to be added is preferably from 0.001 to 20 parts by mass, particularly preferably from 0.01 to 10 parts by mass, based on 100 parts by mass of the aqueous fluoropolymer emulsion. The concentration of the fluoropolymer in the aqueous emulsion used for the coagulation, is preferably from 1 to 50 mass%, more preferably from 5 to 40 mass%.

The coagulated fluoropolymer is preferably collected by filtration and washed with washing water. As the washing water, deionized water, pure water or ultrapure water may, for example, be mentioned. The amount of the washing water is preferably from 1 to 10 times the mass of the fluoropolymer.

Drying of the PTFE fine powder is normally carried out in a state of causing little flow of wet powder obtained by usual coagulation, preferably in a state of leaving it at rest, by means of vacuum, a high frequency wave, or hot air. The drying is carried out at a temperature of preferably from 10 to 230°C, particularly preferably from 100 to 230°C.

In the case of PTFE produced by using the fluorinated emulsifier of the present invention, such PTFE has a small amount of fluorinated emulsifier remained even at a temperature of at most 200°C.

In order to further reduce the fluorocarboxylic acid compound remained in PTFE, drying may be done after the washing in an aqueous medium.

Drying of the melt-processable fluoropolymer is preferably carried out at a temperature of from 10 to 230°C, particularly preferably from 100 to 230°C, in the same manner as PTFE.

Gas discharged by the drying, may be recovered by collecting it in an alkaline liquid having a concentration such that the fluorocarboxylic acid compound separates therein. Further, the fluorocarboxylic acid compound in the waste liquid may be recovered and recycled by a known method.

According to the present invention, it is possible to make the standard specific gravity of PTFE to be in a range of from 2.14 to 2.20, whereby it is possible to obtain PTFE having a high molecular weight. Further, by changing conditions for emulsion polymerization, it is also possible to make the standard specific gravity to be in a range of more than 2.20 up to 2.25.

The average particle size of the PTFE fine powder of the present invention is preferably from 350 to 650 µm, more preferably from 400 to 600 µm. Further, the apparent density is preferably from 0.35 to 0.65 g/mL, more preferably from 0.40 to 0.60 g/mL.

Further, a filler to impart coloration, strength and conductivity, such as titanium oxide, carbon, glass fiber, carbon fiber or graphite, may also be added during the coagulation process.

Further, an aqueous emulsion of the fluoropolymer produced by the present invention may be used as it is, or as a dispersion (aqueous dispersion) product such as a coating material via a processing step such as concentration or formulation for improving the stability of the emulsion and operation efficiency at the time of the processing, as the case requires. The concentration of the fluoropolymer in the aqueous emulsion may be carried out by a known method such as heat concentration in which a nonionic surfactant having a cloudy point is added thereto, and the temperature of an aqueous emulsion is increased to concentrate the fluoropolymer, electroconcentration by means of electrophoresis, or concentration carried out by a membrane material such as an ultrafilter.

In order to improve the stability of the aqueous emulsion, a known anionic surfactant or a nonionic surfactant is used. The former may, for example, be an alkyl sulfate such as sodium dodecyl sulfate or ammonium dodecyl sulfate, an alkanoate such as ammonium dodecanoate, or a sulfosuccinate such as sodium dioctyl sulfosuccinate. The latter may, for example, be an alkyl phenol ethoxylate such as polyoxyethylene nonyl phenyl ether, or an alkyl ether alkoxylate (in which the number of carbon atoms of the alkoxylate is from 2 to 4 or 8) such as polyoxyethylene tridecyl ether.

When the aqueous emulsion is processed into a dispersion product, as a method for removing the fluorocarboxylic acid compound in the aqueous emulsion, it is possible to employ a known means such as a method to have it adsorbed on an anion exchange resin, a method to have it adsorbed on a synthetic adsorbent, a method to have it adsorbed on activated carbon, a method to have it included in a layered double hydroxide or a method of carrying out the above-mentioned concentration operation plural times or concentrating a previously diluted aqueous emulation so as to increase the distribution ratio of the fluorocarboxylic acid compound to the side of waste water at the time of the concentration.

In the aqueous emulsion to be formulated into the dispersion product, at least one of various leveling agents, a preservative, a filler, an organic solvent, an aqueous ammonia or other known components may be dissolved or added.

Further, by letting a polyethylene oxide or a polyurethane type viscosity modifier dissolve therein, it is possible to improve the mechanical stability of a dispersion product.

### EXAMPLES

Now, the present invention will be described in further detail with reference to Examples and Comparative Examples, but it should be understood that the present invention is by no means restricted thereto. Methods for measuring characteristics of the fluoropolymer are as follows:
(A) Average primary particle size (UNIT: µm) of emulsion polymerization PTFE: calculated from the absorbance of an aqueous emulsion to a light at a wavelength of 546 nm, based on U.S. Patent No. 4,036,802.
(B) Standard specific gravity (hereinafter referred to also as "SSG"): Measured in accordance with ASTM D1457-91 a and D4895-91 a. 12.0 g of PTFE was weighed and kept in a cylindrical die with an inner diameter of 28.6 mm under a pressure of 34.5 MPa for 2 minutes. It was put into an oven at 290°C, and the temperature was raised at a rate of 120°C/hr. It was kept at 380°C for 30 minutes. Then, the temperature was lowered at a rate of 60°C/hr, and the die was kept at 294°C for 24 minutes. The molded product was kept in a desiccator at 23°C for 12 hours, and thereafter, the specific gravities of the molded product and water at 23°C were measured and taken as the standard specific gravities.

### EXAMPLE 1

Into a 1.3 L stainless steel autoclave equipped with a baffle plate and a stirrer, 0.281 g of PFDOA as a fluorocarboxylic acid, 8.0 g of paraffin wax (melting point: 52°C) and 630 mL of deionized water were charged. Such an aqueous medium has pH of 2.69. The air in the autoclave was replaced with nitrogen, then the pressure was reduced to at most -0.093 MPa, and the pressure was increased to 1.1 MPa by adding TFE, and the temperature was raised to 70°C with stirring. Then, the pressure was raised to 1.6 MPa by adding TFE, and 0.063 g of disuccinic acid peroxide (concentration: 80 mass%, the rest being water) dissolved in deionized water was injected into the autoclave.

After the inner pressure of the autoclave was confirmed to be lowered by 0.02 MPa, polymerization was proceeded by adding TFE to keep the inner pressure at 1.6 MPa. At the time when the amount of TFE supplied became 70 g in halfway, 0.522 g of PFDOA was dissolved in the deionized water and added to the autoclave. The reaction was terminated at a point where the amount of TFE added reached 250.5 g, and TFE in the autoclave was released into the atmosphere. The polymerization time was 156 minutes. The obtained aqueous PTFE emulsion was cooled, and the supernatant paraffin wax was removed. 761 mL of the aqueous emulsion having a solid content concentration of 28.2 mass% was obtained. Further, the average primary particle size of the PTFE fine particles was 0.21 µm. Coagulum in the reactor was just about a trace.

This aqueous emulsion was diluted with pure water to a concentration of 10 mass% and adjusted to 20°C, followed by stirring and coagulation, and a PTFE fine powder obtained was dried at 120°C for 14 hours. SSG of PTFE obtained was 2.163.

### COMPARATIVE EXAMPLE 1

The polymerization was carried out in accordance with Example 1 except that the fluorocarboxylic acid compound used was changed to APFDO, and the amount to be added before starting the polymerization was changed to 0.295 g and the amount to be added during the polymerization was changed to 0.547 g. Further, the pH of the aqueous medium at the beginning of the polymerization was 6.69. It took 198 minutes to reach a point where the amount of TFE added became 250.5 g as in Example 1. 758 mL of an aqueous emulsion having a solid content concentration of 28.0 mass% was obtained. Further, an average primary particle size of the PTFE fine particles was 0.24 µm. Coagulum in the reactor was just about a trace.

In the same manner as in Example 1, such an aqueous emulsion was stirred to be coagulated, and then a PTFE fine powder obtained was dried at a temperature of 120°C for 14 hours. SSG of PTFE obtained was 2.173.

### EXAMPLE 2

The polymerization was carried out in the same manner as Example 1 except that the fluorocarboxylic acid compound used was changed to PFHxA (in which the perfluoroalkyl group chain has a straight chain component of 98.1 %), and the amount to be added before starting the polymerization was changed to 0.510 g and the amount to be added during the polymerization was changed to 0.947 g. Further, the pH of the aqueous medium at the time of starting the polymerization was 2.41. It took 212 minutes to reach a point where the amount of TFE added became 250.5 g as in Example 1 756 mL of an aqueous emulsion having a solid content concentration of 27.7 mass% was obtained. Further, an average primary particle size of the PTFE fine particles was 0.23 µm. Coagulum in the reactor was just about a trace.

This aqueous emulsion was stirred to coagulate it in the same manner as in Example 1, and then the PTFE fine powder was dried at a temperature of 120°C for 14 hours. SSG of PTFE obtained was 2.167.

### COMPARATIVE EXAMPLE 2

The polymerization was carried out in the same manner as in Example 1 except that the fluorocarboxylic acid compound used was changed to APFHx, and the amount to be added before starting the polymerization was changed to 0.538 g and further the amount to be added during the polymerization was changed to 0.998 g. Further, the pH of an aqueous medium at the beginning of the polymerization was 6.31. It took 259 minutes to reach a point where TFE added became 250.5 g as in Example 1 753 mL of an aqueous emulsion having a solid content concentration of 27.8 mass% was obtained. Further, the average primary particle size of the PTFE fine particles was 0.25 µm. Coagulum in the reactor was just about a trace.

This aqueous emulsion was stirred to coagulate it in the same manner as in Example 1, and then the PTFE fine powder obtained was dried at a temperature of 120°C for 14 hours. SSG of PTFE obtained was 2.171.

**TABLE 1**

| | Unit | Ex. 1 | Comp. Ex. 1 | Ex. 2 | Comp. Ex. 2 |
|---|---|---|---|---|---|
| Fluorocarboxylic acid compound | - | PFDOA | APFDO | PFHxA | APFHx |
| pH of aqueous medium at the beginning of polymerization | - | 2.69 | 6.69 | 2.41 | 6.31 |
| pH of aqueous medium at the end of polymerization | minute | 2.36 | 2.94 | 2.08 | 2.82 |
| Polymerization time | minute | 156 | 198 | 212 | 259 |
| Polymerization rate | g/L-Hr | 127 | 100 | 94 | 77 |
| Average particle size of primary particles | µm | 0.21 | 0.24 | 0.23 | 0.25 |
| SSG | - | 2.163 | 2.173 | 2.167 | 2.171 |

### INDUSTRIAL APPLICABILITY

The fluoropolymer obtainable by the production process of the present invention is formed into a fine powder or pellets, and then used as a raw material for a molded product in various shapes such as a tube, a sheet, a film, a fiber or a block. Further, as emulsion, a dispersion product obtainable by blending it with various components is used as a coating material. Further, it is used also as a binder for other members or an additive to improve characteristics. The applications of the molded product may, for example, be various applications including various tubes, wire coverings, sealing materials, porous membranes, filters, or household or industrial coating materials.

## Claims

1. A method for producing a fluoropolymer, which comprises polymerizing a fluoromonomer by emulsion polymerization in the presence of a polymerization catalyst in an aqueous medium containing a fluorocarboxylic acid compound, wherein the aqueous medium during a period from the beginning to the end of the polymerization has a pH of at most 4, wherein the fluorocarboxylic acid compound has at most 6 carbon atoms and further has at most 3 etheric oxygen atoms per molecule and the fluorocarboxylic acid compound is a perfluorocarboxylic acid compound in the form of an organic acid.

2. The method for producing a fluoropolymer according to Claim 1, wherein the fluorocarboxylic acid compound is C₅F₁₁COOH.

3. The method for producing a fluoropolymer according to Claim 1, wherein the fluorocarboxylic acid compound is CF₃CF₂OCF₂CF₂OCF₂COOH.

4. The method for producing a fluoropolymer according to any one of Claims 1 to 3, wherein the aqueous medium in the polymerization has a pH of at least 1.

5. The method for producing a fluoropolymer according to any one of Claims 1 to 4, wherein the fluoromonomer is at least one member selected from the group consisting of tetrafluoroethylene, vinylidene fluoride, hexafluoropropylene, a perfluoro(alkyl vinyl ether), chlorotrifluoroethylene, a polyfluoroalkylethylene, perfluoro(2,2-dimethyl-1,3-dioxole), a perfluoro(4-alkoxy-1,3-dioxole) and CF₂=CFO(CF₂)ₙCF=CF₂ (wherein n is 1 or 2.).

6. The method for producing a fluoropolymer according to any one of Claims 1 to 4, wherein the fluoromonomer is tetrafluoroethylene.

## Patentansprüche

1. Verfahren zum Herstellen eines Fluorpolymers, welches das Polymerisieren eines Fluormonomers durch Emulsionspolymerisation in der Gegenwart eines Polymerisationskatalysators in einem wässrigen Medium, das eine Fluorcarbonsäureverbindung enthält, umfasst, wobei das wässrige Medium während einer Dauer von dem Beginn bis zum Ende der Polymerisation einen pH-Wert von höchstens 4 aufweist, wobei die Fluorcarbonsäureverbindung höchstens 6 Kohlenstoffatome aufweist und ferner höchstens 3 etherische Sauerstoffatome pro Molekül aufweist und wobei die Fluorcarbonsäureverbindung eine Perfluorcarbonsäureverbindung in der Form einer organischen Säure ist.

2. Verfahren zum Herstellen eines Fluorpolymers nach Anspruch 1, wobei die Fluorcarbonsäureverbindung C₅F₁₁COOH ist.

3. Verfahren zum Herstellen eines Fluorpolymers nach Anspruch 1, wobei die Fluorcarbonsäureverbindung CF₃CF₂OCF₂CF₂OCF₂COOH ist.

4. Verfahren zum Herstellen eines Fluorpolymers nach einem der Ansprüche 1 bis 3, wobei das wässrige Medium in der Polymerisation einen pH-Wert von mindestens 1 aufweist.

5. Verfahren zum Herstellen eines Fluorpolymers nach einem der Ansprüche 1 bis 4, wobei das Fluormonomer mindestens ein Mitglied ist, ausgewählt aus der Gruppe, bestehend aus Tetrafluorethylen, Vinylidenfluorid, Hexafluorpropylen, einem Perfluor(alkylvinylether), Chlortrifluorethylen, einem Polyfluoralkylethylen, Perfluor(2,2-dimethyl-1,3-dioxol), einem Perfluor(4-alkoxy-1,3-dioxol) und CF₂=CFO(CF₂)ₙCF=CF₂ (wobei n 1 oder 2 ist).

6. Verfahren zum Herstellen eines Fluorpolymers nach einem der Ansprüche 1 bis 4, wobei das Fluormonomer Tetrafluorethylen ist.

## Revendications

1. Procédé pour produire un polymère fluoré, qui comprend la polymérisation d'un monomère fluoré par polymérisation en émulsion en présence d'un catalyseur de polymérisation dans un milieu aqueux contenant un composé acide fluorocarboxylique, dans lequel le milieu aqueux, pendant une période allant du début à la fin de la polymérisation, a un pH d'au plus 4, dans lequel le composé acide fluorocarboxylique a au plus 6 atomes de carbone et a en outre au plus 3 atomes d'oxygène d'éther par molécule, et le composé acide fluorocarboxylique est un composé acide perfluorocarboxylique sous la forme d'un acide organique.

2. Procédé pour produire un polymère fluoré selon la revendication 1, dans lequel le composé acide fluorocarboxylique est C₅F₁₁COOH.

3. Procédé pour produire un polymère fluoré selon la revendication 1, dans lequel le composé acide fluorocarboxylique est CF₃CF₂OCF₂CF₂OCF₂COOH.

4. Procédé pour produire un polymère fluoré selon l'une quelconque des revendications 1 à 3, dans lequel le milieu aqueux dans la polymérisation a un pH d'au moins 1.

5. Procédé pour produire un polymère fluoré selon l'une quelconque des revendications 1 à 4, dans lequel le monomère fluoré est au moins un membre choisi dans l'ensemble constitué par le tétrafluoroéthylène, le fluorure de vinylidène, l'hexafluoropropylène, un perfluoro(alkylvinyléther), le chlorotrifluoroéthylène, un polyfluoroalkyléthylène, le perfluoro(2,2-diméthyl-1,3-dioxole), un perfluoro(4-alcoxy-1,3-dioxole) et CF₂=CFO(CF2)ₙCF=CF₂ (où n vaut 1 ou 2).

6. Procédé pour produire un polymère fluoré selon l'une quelconque des revendications 1 à 4, dans lequel le monomère fluoré est le tétrafluoroéthylène.
